# EUROPEAN PATENT APPLICATION

(11) **EP 4 694 235 A1**
(43) Date of publication of application: **11.02.2026**
(21) Application number: 24807449.4
(22) Date of filing: 10.05.2024
(51) Int. Cl.: H04W 8/02, H04W 8/24, H04W 8/26, H04W 40/24, H04W 48/18, H04W 60/04, H04W 76/10

(54) **METHOD AND APPARATUS FOR REPORTING PDU SESSION INFORMATION**

(30) Priority: 12.05.2023 KR 20230061994
(71) Applicant: Samsung Electronics Co., Ltd., Suwon-si, Gyeonggi-do 16677 (KR)
(72) Inventor: LEE, Jicheol, Suwon-si, Gyeonggi-do 16677 (KR); KIM, Dongyeon, Suwon-si, Gyeonggi-do 16677 (KR)
(74) Representative: Nederlandsch Octrooibureau
(86) International application number: PCT/KR2024/006321
(87) International publication number: WO 2024/237574

(57) **Abstract**

The present disclosure relates to: a communication technique of a 5G communicaiton system for supporting higher data transmission rates than 4G system, and the system. According to the presnet dsiclosure, a method performed by a visited-policy control function (V-PCF) of a visited public land mobile network (VPLMN) in a local breakout (LBO) roaming situation includes the steps of: transmitting a terminal policy control request message to an H-PCF of a home PLMN (HPLMN); receiving, from the H-PCF, a policy control request trigger (PCRT) for capability informaiton about a terminal related to a UE route selection policy (URSP); transmitting a subscription request for the URSP-related terminal capability information to an SM-PCF managing a packet data unit (PDU) session, receiving the URSP-related terminal capability information from the SM-PCF, and transmititng the URSP-related terminal capabiltiy information to the H-PCF.

## Description

### [Technical Field]

The disclosure relates to a wireless communication system and, more particularly, to the content about a method of identifying compliance with a UE routing selection policy by a UE in a cellular wireless communication system (5G system).

### [Background Art]

In order to meet wireless data traffic demands that have increased after 4G communication system commercialization, efforts to develop an improved 5G communication system or a pre-5G communication system have been made. For this reason, the 5G communication system or the pre-5G communication system is called a beyond 4G network communication system or a post LTE system.

In order to achieve a high data transmission rate, implementation of the 5G communication system in an ultra-high frequency (mmWave) band (for example, 60 GHz band) is being considered. Beamforming, massive MIMO, full dimensional MIMO (FD-MIMO), array antenna, analog beam-forming, and large scale antenna technologies are being discussed to mitigate propagation path loss and increase propagation transmission distance in the mmWave band.

Further, the 5G communication system has developed technologies such as an evolved small cell, an advanced small cell, a cloud Radio Access Network (cloud RAN), an ultra-dense network, device to device communication (D2D), a wireless backhaul, a moving network, cooperative communication, coordinated multi-points (CoMP), and interference cancellation to improve the system network.

In addition, the 5G system has developed advanced coding modulation (ACM) schemes such as hybrid FSK and QAM modulation (FQAM) and sliding window superposition coding (SWSC), and advanced access technologies such as filter bank multi carrier (FBMC), non orthogonal multiple access (NOMA), and sparse code multiple access (SCMA), etc.

Meanwhile, in order to promote evolution from the conventional 4G LTE system to the 5G system, the 3GPP in charge of cellular mobile communication standards has named a new core network structure as a 5G core (5GC) and standardized it.

The 5GC supports the following differentiated functions compared to an evolved packet core (EPC) that is a network core for the conventional 4G.

First, a network slice function is introduced in the 5GC. In requirements of the 5G, the 5GC should support various UE types and services (e.g., enhanced mobile broadband (eMBB), ultra reliable low latency communications (URLLC), and massive machine type communications (mMTC)). The respective UEs/services have different requirements for the core network. For example, the eMBB service requires a high data rate, and the URLLC service requires high stability and low latency. A technology proposed to meet such various service requirements is the network slice scheme.

The network slice is a method of virtualizing one physical network to generate several logical networks, and respective network slice instances (NSIs) may have different characteristics. Accordingly, every NSI may have a network function (NF) suitable for the characteristic and thus meet various service requirements. Various 5G services may be efficiently supported through allocation of the NSI suitable for the service characteristic required for each UE.

Second, the 5GC may easily support a network virtualization paradigm through separation of a mobility management function and a session management function. In the conventional 4G LTE, all UEs were able to receive services over the network through a signaling exchange with a single core equipment that is a mobility management entity (MME) in charge of registration, authentication, mobility management, and session management functions. However, when the single equipment such as the MME supports all functions as the number of UEs explosively increases and mobility and traffic/session characteristics, which should be supported according to the UE type, are subdivided in the 5G, scalability of adding entities according to each of required functions cannot help being reduced. Accordingly, various functions are being developed based on a structure that separates the mobility management function and the session management function to improve scalability in terms of function/implementation complexity and signaling load of core equipment in charge of the control plane.

### [Disclosure]

### [Technical Problem]

The disclosure intends to provide a method by which a V-PCF of a VPLMN transfers a report on a URSP enforcement rule of the UE to an H-PCF in an LBO roaming environment.

The disclosure intends to, when slice replacement occurs or DNN replacement occurs in a serving network, allow a PCF to identify whether the same complies with a URSP.

### [Technical Solution]

According to an embodiment of the disclosure, a method performed by a visited-policy control function (V-PCF) of a visited public land mobile network (VPLMN) in a local breakout (LBO) roaming situation may include transmitting a terminal policy control request message to an H-PCF of a home PLMN (HPLMN); receiving a policy control request trigger (PCRT) for capability information of a terminal related to a UE route selection policy (URSP) from the H-PCF; transmitting a request for subscribing to the capability information of the terminal related to the URSP to an SM-PCF managing a packet data unit (PDU) session; receiving the capability information of the terminal related to the URSP from the SM-PCF; and transmitting the capability information of the terminal related to the URSP to the H-PCF.

The method performed by the V-PCF may further include transmitting a request message for subscribing to an SM policy connection between an SMF and the SM-PCF to a biding support function (BSF).

The capability information of the terminal related to the URSP may include a data network name (DNN) requested by the terminal and a DNN selected by a session management function (SMF).

The capability information of the terminal related to the URSP may include S-NSSAI requested by the terminal and alternative S-NSSAI.

The method performed by the V-PCF may further include, when the capability information of the terminal related to the URSP received from the SM-PCF includes single-network slice selection assistance information (S-NSSAI), changing the S-NSSAI to HPLMN S-NSSAI.

According to another embodiment of the disclosure, a method performed by a home-policy control function (H-PCF) of a home public land mobile network (HPLMN) in a local breakout (LBO) roaming situation may include receiving a terminal policy control request message from a V-PCF of a visited PLMN (VPLMN); transmitting a policy control request trigger (PCRT) for capability information of a terminal related to a UE route selection policy (URSP) to the V-PCF; and receiving the capability information of the terminal related to the URSP from the V-PCF.

According to another embodiment of the disclosure, a visited-policy control function (V-PCF) of a visited public land mobile network (VPLMN) operating in a local breakout (LBO) roaming situation may include a transceiver; and a controller, wherein the controller is configured to transmit a terminal policy control request message to an H-PCF of a home PLMN (HPLMN), receive a policy control request trigger (PCRT) for capability information of a terminal related to a UE route selection policy (URSP) from the H-PCF, transmit a request for subscribing to the capability information of the terminal related to the URSP to an SM-PCF managing a packet data unit (PDU) session, receive the capability information of the terminal related to the URSP from the SM-PCF, and transmit the capability information of the terminal related to the URSP to the H-PCF.

### [Advantageous Effect]

According to the disclosure, even when DNN replacement is performed, the V-PCF may determine whether the UE performs a URSP by identifying PDU session information reported by the SM-PCF.

According to the disclosure, even when S-NSSAI replacement is performed, the V-PCF may determine whether the UE performs a URSP by identifying PDU session information reported by the SM-PCF.

According to the disclosure, the H-PCF (V-PCF) may determine whether a PDU session that matched in an application of the UE matched newly or matched the existing session.

### [Description of Drawings]

FIG. 1 is a diagram illustrating a 5G system network structure in a service-based format.
FIG. 2 is a diagram illustrating the concept of a UE route selection policy (hereinafter, referred to as a URSP).
FIGs. 3A and 3B are flowcharts illustrating a method by which a V-PCF performs a report on a URSP enforcement rule of a UE for an H-PCF.
FIG. 4 is a diagram illustrating a structure of the UE according to an embodiment of the disclosure.
FIG. 5 is a diagram illustrating a structure of a network entity according to an embodiment of the disclosure.

### [Mode for Disclosure]

Hereinafter, embodiments of the disclosure will be described in detail with reference to the accompanying drawings. In describing the disclosure, when it is determined that detailed description of known functions or configurations may obscure the gist of the disclosure, the detailed description will be omitted. The terms which will be described below are terms defined in consideration of the functions in the disclosure, and may vary depending on intention or customs of users or operators, or the like. Therefore, the definition of the terms should be made based on the content throughout the specification. For a similar reason, some components are exaggerated, omitted, or schematically illustrated in the accompanying drawings. Further, the size of each component does not totally reflect the actual size. In each figure, the same reference numeral is assigned to the same or corresponding component. Advantages and features of the technical idea according to the disclosure, and methods of accomplishing the same will be apparent with reference to the embodiments described below in detail in conjunction with the accompanying drawings. However, the disclosure is not limited to the following embodiments, and may be implemented in various different forms, and the embodiments are provided to make the disclosure complete and to completely inform those skilled in the art to which the disclosure belongs of the scope of the disclosure, and the disclosure is defined only by the scope of the claims. Throughout the specification, the same reference numeral indicates the same component. In describing the disclosure, when it is determined that detailed description of known functions or configurations may obscure the gist of the disclosure, the detailed description will be omitted. The terms which will be described below are terms defined in consideration of the functions in the disclosure, and may vary depending on intention or customs of users or operators, or the like. Therefore, the definition of the terms should be made based on the content throughout the specification.

Hereinafter, a base station is the entity that allocates resources to a UE, and may be at least one of an eNode B, a Node B, a base station (BS), a radio access network (RAN), an access network (AN), an RAN node, a radio access unit, a base station controller, or a node in a network. The UE may include a user equipment (UE), a mobile station (MS), a cellular phone, a smartphone, a computer, or a multimedia system capable of performing a communication function. In the disclosure, downlink (DL) refers to a wireless transmission path of a signal which the BS transmits to the UE, and uplink (UL) refers to a wireless transmission path of a signal which the UE transmits to the BS. Hereinafter, although the LTE or LTE-A system is described as an example in embodiments of the disclosure, the embodiments of the disclosure may be applied to other communication systems having the similar technical background or channel form. For example, 5G mobile communication technology (5G, new radio, or NR) developed after LTE-A may be included in systems to which the embodiments of the disclosure can be applied, and the 5G below may be the concept including the conventional LTE and LTE-A, and similar other services. Further, embodiments of the disclosure may be applied to other communication systems through some modifications without departing from the scope of the disclosure, based on the determination of those skilled in the art. It may be understood that each block of the flowchart illustrations and combinations of the flowchart illustrations can be implemented by computer program instructions.

Since these computer program instructions can be installed in a processor for a general-purpose computer, special-purpose computer, or other programmable data processing apparatus, the instructions which are executed via the processor of the computer or other programmable data processing apparatus generate a means for performing the functions specified in the flowchart block(s). Since these computer program instructions can also be stored in a computer-available or computer-readable memory that can direct a computer or other programmable data processing apparatuses in order to perform functions in a particular manner, the instructions stored in the computer-available or computer-readable memory can generate manufactured items including an instruction means which performs the functions specified in the flowchart block(s). Since the computer program instructions can be installed in a computer or other programmable data processing apparatuses, a series of operational steps may be performed in the computer or other programmable data processing apparatuses to generate a process performed by the computer, and thus the instructions which execute the computer or other programmable data processing apparatuses can provide steps for performing the functions specified in the flowchart block(s).

Further, each block may represent a module, a segment, or a portion of code, which includes one or more executable instructions for performing the specified logical function(s). In addition, in some alternative implementations, it should be noted that the functions mentioned in the blocks can occur out of the order. For example, two blocks shown in succession can, in fact, be executed substantially concurrently, or the blocks can sometimes be executed in the reverse order, depending upon the function involved. The term "unit (or ~er)" used in the embodiments of the disclosure refers to a software or hardware component such as a field-programmable gate array (FPGA) or an application-specific integrated circuit (ASIC), and the "unit (or ~er)" may play some roles. However, the "unit (or ~er)" is not limited to software or hardware. The "unit (or ~er)" may be constructed in an addressable storage medium or constructed to reproduce one or more processors. Accordingly, for example, the "unit (or ~er)" includes software components, object-oriented software components, components such as class components and task components, processors, functions, attributes, procedures, subroutines, segments of program code, drivers, firmware, microcode, a circuit, data, a database, data structures, tables, arrays, and parameters. Functions provided within the components and the "units or (~ers)" may be combined into a fewer number of components and "units or (~ers)" or more divided into additional components and "units or (~ers)". In addition, the components and the "units (or ~ers)" may be implemented to reproduce one or more CPUs within a device or a secure multimedia card. In embodiments, the "units (or ~ers)" may include one or more processors.

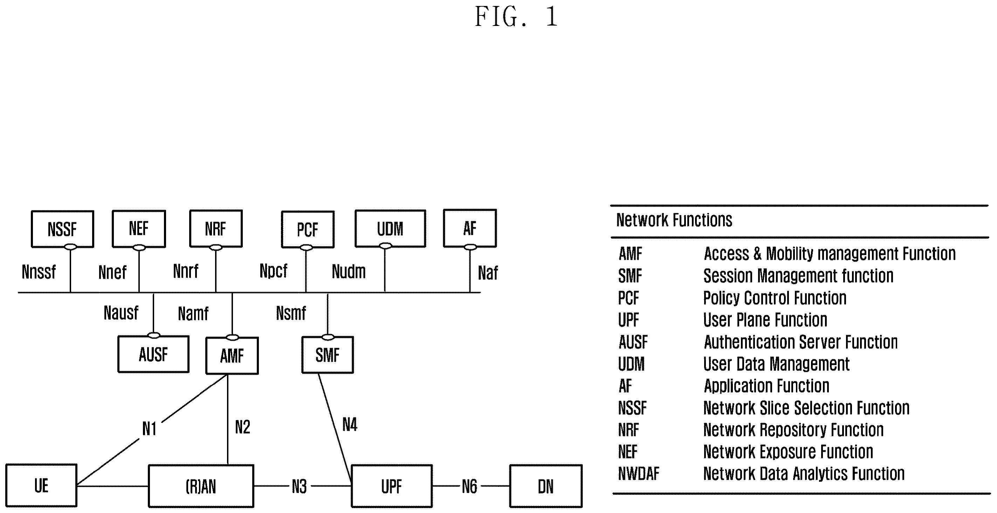

FIG. 1 is a diagram illustrating a network structure and an interface of a 5G system according to an embodiment of the disclosure. Network entities included in the network structure of the 5G system in FIG. 1 may include network functions (NFs) according to system implementation.

Referring to FIG. 1, the network structure of the 5G system may include various network entities. For example, the 5G system may include an authentication server function (AUSF), a (core) access and mobility management function (AMF), a session management function (SMF) , a policy control function (PCF), an application function (AF), a unified data management (UDM), a data network (DN), a network exposure function (NEF), a network slicing selection function (NSSF), an edge application service domain repository (EDR), an edge application server (EAS) (not shown), an EAS discovery function (EASDF) (not shown), a user plane function (UPF), a (radio) access network ((R)AN), and a terminal, that is, a user equipment (UE) 101.

Respective NFs of the 5G system support the following functions.

The AUSF processes and stores data for authentication of the UE.

The AMF provides a function for access and mobility management in units of UEs, and one AMF may be connected basically per UE. Specifically, the AMF supports functions such as signaling between CN nodes for movement between 3GPP access networks, termination of a radio access network (RAN) CP interface (that is, an N2 interface), termination of non access stratum (NAS) signaling (N1), NAS signaling security (NAS ciphering and integrity protection), AS security control, registration management (registration area management), connection management, idle mode UE reachability (including control and performance of paging re-transmission), mobility management control (subscription and policy), supporting of intra-system mobility and inter-system mobility, supporting of network slicing, SMF selection, lawful intercept (for an AMF event and an interface to an LI system), provision of transmission of a session management (SM) message between the UE and the SMF, a transparent proxy for SM message routing, access authentication, access authorization including roaming authority check, provision of transmission of an SMS message between the UE and an SMSF, a security anchor function (SAF), and/or security context management (SCM). Some or all of the functions of the AMF may be supported within a single instance of one AMF.

The DN refers to, for example, operator service, Internet access, or 3^{rd}-party service. The DN transmits a downlink protocol data unit (PDU) to the UPF or receives, from the UPF, a PDU transmitted from the UE.

The PCF receives information on the packet flow from the application server and provides a function of determining policies such as mobility management and session management. Specifically, the PCF supports a function of supporting a unified policy framework for controlling network operation, providing a policy rule to allow control plane function(s) (for example, the AMF, the SMF, and the like) to enforce the policy rule, implementing a front end for accessing relevant subscription information to determine a policy within a user data repository (UDR), and the like.

The SMF provides a session management function, and respective sessions may be managed by different SMFs when the UE has a plurality of sessions. Specifically, the SMF supports functions of managing a session (for example, establishing, modifying, and releasing a session including maintenance of a tunnel between the UPF and the (R)AN node), allocating and managing (including selective authentication of) a UE IP address, selecting and controlling a UP function, configuring traffic steering for routing traffic from the UPF 104 to a proper destination, termination of an interface for policy control functions, trying a control part of a policy and Quality of Service (QoS), lawful intercept (for an SM event and an interface for an LI system), termination of an SM part of a NAS message, downlink data notification, an initiator of AN-specific SM information (transferred to the (R)AN through N2 via the AMF), determining an SSC mode of a session, a roaming function, and the like. Some or all of the functions of the SMF may be supported within a single instance of one SMF.

The UDM stores subscription data of the user, policy data, or the like. The UDM includes two parts, that is, an application front end (FE) (not shown) and a user data repository (UDR) (not shown).

The FE includes a UDM FE in charge of location management, subscription management, and credential processing, etc., and a PCF in charge of policy control. The UDR stores data required for functions provided by the UDM-FE and a policy profile required by the PCF. Data stored in the UDR includes user subscription data and policy data including a subscription identifier, security credential, access and mobility-related subscription data, and session-related subscription data. The UDM-FD accesses subscription information stored in the UDR and supports functions of authentication credential processing, user identification handling, access authentication, registration/mobility management, subscription management, SMS management, and the like.

The UPF transfers a downlink PDU received from the DN to the UE via the (R)AN 102 and transfers an uplink PDU received from the UE via the (R)AN to the DN. Specifically, the UPF supports functions of an anchor point for intra/inter RAT mobility, an external PDU session point of interconnect to a data network, packet routing and forwarding, a user plane part of trying packet inspection and policy rule, lawful intercept, reporting an amount of traffic usage, an uplink classifier for supporting routing to traffic flow to a data network, a branching point for supporting a multi-homed PDU session, handling the QoS for a user plane (for example, performing packet filtering, gating, or uplink/downlink rate), uplink traffic verification (SDF mapping between service data flow (SDF) and QoS flow), marking a transport level packet within uplink and downlink, and buffering a downlink packet, a downlink data notification triggering function, and the like. Some or all of the functions of the UPF may be supported within a single instance of one UPF.
- The AF interworks with a 3GPP core network to provide service (for example, supports functions of influencing an application on traffic routing, accessing network capability exposure, interworking with a policy framework for policy control, or the like).

The (R)AN collectively refers to a new radio access network that supports all of an evolved UTRA (E-UTRA), which is an evolved version of the 4G radio access technology, and a new radio (NR) access technology (for example, gNB).

The gNB supports functions for managing radio resources (that is, radio bearer control, radio admission control, connection mobility control, dynamic allocation of resources to the UE in uplink/downlink (that is, scheduling)), compressing an Internet Protocol (IP) header, encrypting a user data stream and performing integrity protection, selecting the AMF in UE attachment when routing to the AMF is not determined on the basis of information provided to the UE, user plane data routing to UPF(s), control plane information routing to the AMF, setting and releasing connection, scheduling and transmitting a paging message (generated from the AMF), scheduling and transmitting system broadcast information (generated from AMF or operating and maintenance (O&M)), performing measurement for mobility and scheduling and configuring a measurement report, transport level packet marking in uplink, managing session, supporting network slicing, managing QoS flow and performing mapping to a data radio bearer, supporting the UE in an inactive mode, distributing NAS messages, selecting a NAS node, sharing a radio access network, dual connectivity, tight interworking between NR and E-UTRA, and the like.

The UE refers to a user equipment. A user device may be referred to as a terminal, a mobile equipment (ME), a mobile station (MS), or the like. Further, the user device may be a portable device such as a notebook, a mobile phone, a personal digital assistant (PDA), a smartphone, or a multimedia device, or may be a device, which cannot be portable such as a personal computer (PC) or a vehicle-mounted device.

The NEF provides, for example, a means for safely exposing services and capabilities for a 3^{rd} party, internal exposure/re-exposure, an application function, and edge computing provided by 3GPP network functions. The NEF receives information (based on exposed capability(s) of other NF(s)) from other NF(s). The NEF may store received information as data structured using an interface standardized to a data storage network function. The stored information may be re-exposed to other NF(s) and AF(s) by the NEF and may be used for another purpose such as analysis.

The NSSF may select a set of network slice instances which serve the UE. The NSSF may determine allowed network slice selection assistance information (NSSAI) and map subscribed single-network slice selection assistance information (S-NSSAI) as necessary. The NSSF may determine configured NSSAI and map subscribed S-NSSAI as necessary. The NSSF may determine an AMF set used for serving the UE or ask the NRF according to a configuration to determine a list of candidate AMFs.

The NRF supports a service discovery function. The NRF receives an NF discovery request from the NF instance and provides information on the found NF instance to the NF instance. Further, the NRF maintains available NF instances and service supported thereby.

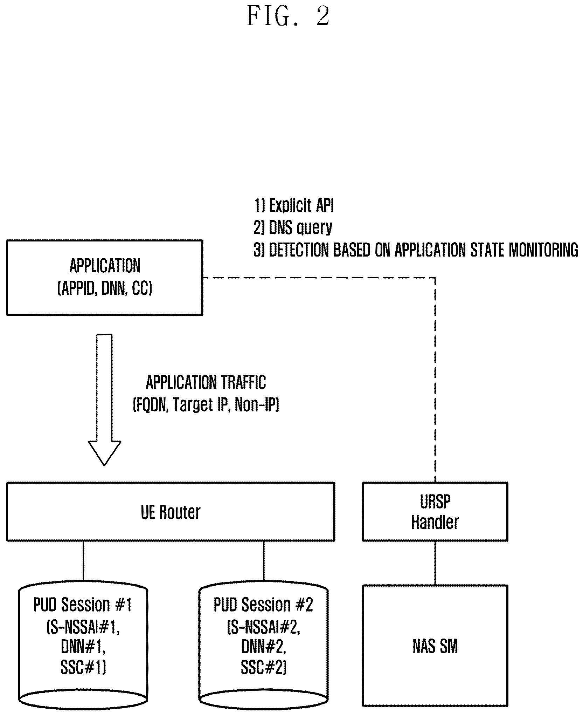

FIG. 2 is a diagram illustrating the concept of a UE route selection policy (hereinafter, referred to as a URSP).

As briefly shown in [Table 1], the URSP rule is constituted by traffic descriptor information for identifying a UE application or traffic generated by the UE application, and a route selection component for determining which PDU session will be correlated with the UE application or UE application traffic when the identified traffic descriptor is detected.

**[Table 1]**

| **URSP Rules** | | | | | | | |
|---|---|---|---|---|---|---|---|
| **PSI** | **Prec eden ce** | **Traffic Descriptor (TD)** | **Route Selection Component (RSC)** | | | | |
| | | **IP, FQDN, APPID, CC, DNN** | **S-NSSAI** | **DNN** | **PDU-Type** | **SSC Mode** | **Access-Type** |
| PSI = 1 | 1 | IP (10.10.10.*) | S-NSSAI# 1 | DNN#1 | IPv4 | | |
| | 2 | FQDN (www.svc1.com) | S-NSSAI# 2 | DNN#2 | IPv4/v6 | SSC#2 | 3GPP |
| | 3 | APPID (A-OS, com.go.tv), IP (20.20.*.*) | S-NSSAI# 3 | DNN#2 | IPv4 | | |
| PSI = 2 | 4 | Connection capability (IMS) | S-NSSAI# 4 | DNN#3 | IPv4 | SSC#1 | 3GPP |
| | 5 | IP (30.30.*.*), FQDN (www.svc2.com) | S-NSSAI# 5 | DNN#2 | IPv4v6 | SSC#2/3 | |
| PSI = 3 | 6 | DNN#3 | S-NSSAI# 6 | DNN#4 | | | |

The traffic descriptor includes the content including features for detecting a UE application or traffic generated by the application, and may include the following elements.
▪ Application descriptor: is information that may refer to an application of the UE and includes an OSID and an APPID.
▪ IP descriptor: displays an IP address indicating a destination address of an IP packet transmitted by the UE. IP 3-tuple, that is, an IP destination address, a port number, and a protocol may be included.
▪ Non-IP descriptor: is information that may designate a recipient of non-IP data.
▪ Domain descriptor: expresses a destination address of a server with which the UE makes a connection in the FQDN format.
▪ Connection capability (CC): corresponds to type information that may designate a characteristic of connected traffic and may have a value such as IMS, MMS, or Internet.
▪ DNN: is a data network name.

As shown in [Table 1], the UE route selection component (RSC) includes the following elements which may designate attributes of a PDU session so that an application or application traffic detected by a traffic descriptor corresponds to a specific PDU session.
▪ Data network name (DNN): is a data network name. When the UE accesses an EPC network, it may be used to be the same as an access point name (APN).
▪ S-NSSAI: is information that may designate a network slice.
▪ PDU session type: is an element that may designate the type of a PDU-session which may designate IPv4, IPv6, IPv4v6, Ethernet, or Non-IP.
▪ SSC mode: is an element which refers to continuity of the session and service and may have a value of SSC mode 1, 2, or 3.
▪ Access-type: is an element which refers to whether the PDU session is a PDU session connected through 3GPP access or a session connected through non-3GPP access.

A plurality of URSP rules may be separately included in policy selection within a UE policy container, and may be distributed and included in a plurality of policy selections not to exceed the maximum allowed transport size of the NAS layer. One URSP rule cannot be separately included in two policy selections, and one complete URSP rule should be included in one policy selection.

The URSP rules may have priority for each rule.

The UE receives the URSP on the NAS layer. Thereafter, the UE detects the generation of a UE application or UE application traffic.

A method of detecting the UE application is described below.
▪ The UE application may require a specific network through an API provided by an operating system of the UE. The API provided by the operating system of the UE may include direct information corresponding to the traffic descriptor received from the NAS of modem of the UE or information which may be mapped to the traffic descriptor.
▪ The detection of the UE application may be performed through an indirect method by the UE operating system. For example, when the UE application is installed, an Android operating system of the UE may know whether the UE application is installed by a package manager managing the same, and also detect an action of the user and recognize a state of the application. According to the state of the application managed in the operating system, the UE operating system may indirectly detect access of the application to the network by detecting a change in the state such as an event of occupying a user screen by the application (an event of switching to a foreground activity).
▪ The operating system of the UE may detect the UE application or traffic at which the UE application is generated even when an API in which the UE application transmits a packet through the UE operating system is called.
▪ When the UE application provides an FQDN and attempts to access the Internet or the service operated in edge computing, the UE operating system may detect the FQDN provided by the UE application.

When the operating system of the UE detects the application or traffic generated by the application in the URSP handler, the URSP handler may identify a URSP rule received by the NAS and identify which URSP rule corresponds to the detected application.

When finding a traffic descriptor that matches the URSP rule, the URSP handler identifies whether a PDU session that matches an RSC corresponding to the traffic descriptor is currently generated. When the PDU session having the RSC that matches the URSP rule already exists, the URSP handler binds the corresponding UE application to the corresponding PDU session. Thereafter, traffic generated from the bound application is transmitted using the bound PDU session.

When there is no PDU session including the RSC associated with the traffic descriptor found by the URSP handler, the URSP handler may initiate a PDU session generation procedure for generating the corresponding PDU session. When generating the PDU session, the UE may include a PDU session parameter corresponding to the RSC of the URSP rule to initiate the generation of the PDU session.

In the disclosure, when the URSP handler detects the application or application traffic and there is a URSP rule corresponding thereto but a PDU session having a corresponding RSC was not generated, the UE may initiate the generation of a new PDU session and transmit the PDU session parameter corresponding to the RSC included in the URSP rule and information which may refer to the found application together through a PDU session generation request message.

In the disclosure, the information, which may refer to the found application, is referred to as URSP enforcement report information for consistency of description. The URSP enforcement report information may include a traffic descriptor value (for example, an application descriptor, a DNN, an IP address, an FQDN, a connection capability, or the like). A representative traffic descriptor value, and a DNN, an APN, and an S-NSSAI value, which are route selection components associated therewith, may be together included in the URSP enforcement report information.

In the case where the UE receives connection capability information transmitted along with the URSP rule, when the detected application corresponds to the connection capability, the UE may perform an operation of reporting the connection capability information through a PDU session generation request or modification message.

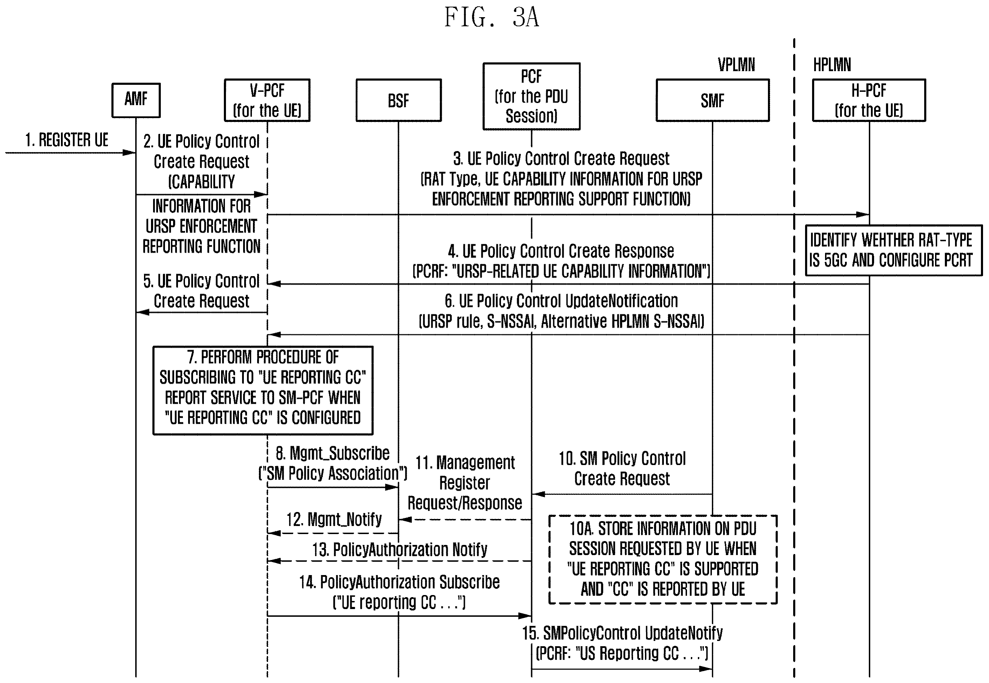

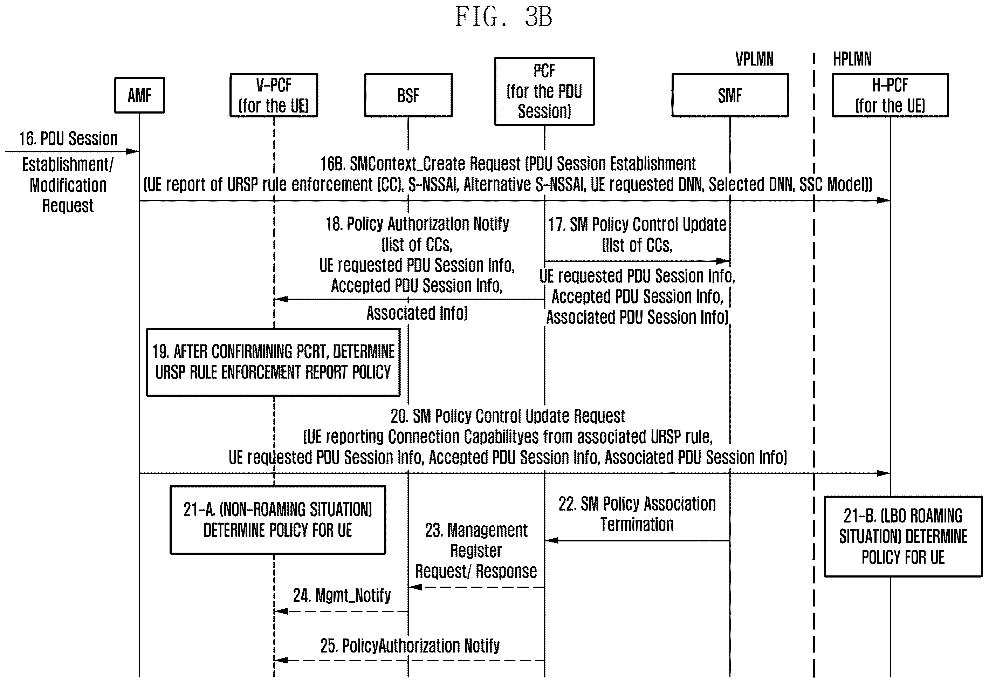

FIGs. 3A and 3B are flowcharts illustrating a method by which a V-PCF performs a report on a URSP enforcement rule of the UE for an H-PCF.

Step 1. The UE may transfer UE capability information to the AMF in order to indicate whether a URSP enforcement report function is provided. The UE capability information may be a URSP enforcement reporting support indication (URSI). The URSI may be an indicator indicating a function (capability) that makes a URSP enforcement report when the UE detects an application corresponding to the URSP rule. When detecting the application corresponding to the URSP rule, the UE transmitting the URSI may transfer a PDN connection generation request including the URSP enforcement reporting information to the PGW-C/SMF of the EPC. Further, when detecting the application corresponding to the URSP rule, the UE transmitting the URSI may transfer a PDU session generation/modification request including the URSP enforcement reporting information to the SMF of the 5GC. The URSP enforcement reporting information may include connection capability information within the traffic descriptor of the URSP. In the EPC, the connection capability information and the S-NSSAI information may be transmitted together.

Step 2. The AMF receiving a registration request message from the UE may make a request for a UE policy association connection to the V-PCF in charge of a UE policy. The AMF transfers UE capability information for the URSP enforcement report function received from the UE to the V-PCF.

Step 3. In the case of roaming, the V-PCF transfers a UE policy control request message (policy control create request message) to the H-PCF of the HPLMN. The UE policy control request message may include UE capability information for the URSP enforcement report function received from the UE. The V-PCF may transfer RAT-type information to the H-PCF. The H-PCF may identify whether the RAT-type is the 5GC, based on RAT-type information received from the V-PCF.

The H-PCF determines whether the URSP uses URSP rule enforcement. When the URSP uses the URSP rule enforcement, the H-PCF may configure a policy control request trigger (PCRT) for a UE report of the URSP rule enforcement and a PCRT for a UE reporting of CC from associated URSP rule in the V-PCF. The PCRT information may be included in a UE policy control generation response message and transferred to the V-PCF.

Step 4. The V-PCF receives the PCRT for the "UE reporting of CC from associated URSP rule" from the H-PCF.

Step 5. The V-PCF may transfer the UE policy control generation response message to the AMF.

Step 6. The H-PCF may transfer a UE policy control update notification message including the URSP policy for the UE to the V-PCF. The H-PCF may transmit not only the URSP policy but also HPLMN S-NSSAI and alternative HPLMN S-NSSAI information for the UE. The V-PCF may perform a procedure of transferring the URSP information received from the H-PCF to the UE through step 6 (not shown). The V-PCF may store the HPLMN S-NSSAI and alternative HPLMN S-NSSAI information received from the H-PCF.

Step 7. The V-PCF may receive the PCRT for the UE reporting CC from associated URSP rule from the H-PCF through the message described in step 4. The V-PCF receiving the information may perform a procedure of making the SM-PCF (PCF for the PDU session) managing the PDU session associated with the UE subscribe to a reporting service of "UE reporting CC" through the process from step 8 to step 15.

Step 8. The V-PCF may transfer a subscription request message for subscribing to the SM policy connection notification service (that is, SM-related policy connection generation/release notification between the SMF and the SM-PCF) to the BSF.

Step 10. The UE generates the PDU session with the SMF, and the SMF generates the SM policy connection with the SM-PCF. The SMF may transfer a session management policy control generation request (SM policy control create request) message to the SM-PCF during the PDU session generation process. In step 10A, the SMF may store URSP-related UE report capability information.

Step 11. The SM-PCF performs a registration request procedure in the BSF. A message for the registration request procedure may include an allocated UE address/prefix, an SUPI, a DNN, S-NSSAI, and a PCF address.

Step 12. Mgmt_Notify: when the UE-PCF subscribed to the BSF (in the previous step), the BSF notifies the V-PCF that the SM-PCF (PCF for PDU session) was registered in the BSF. Notified information may include a UE address, a PCF address, a PCF instance ID, a PCF set ID, and information at a binding level. When there is a plurality of PDU sessions for one UE, the BSF may transfer a plurality of notifications to the PCF.

Step 13. PolicyAuthorization_Notify: when the V-PCF transmits a notification request to the AMF in the case where the SM-PCF is available, the SM-PCF may transfer the notification message indicating that the SM policy connection was generated to the V-PCF. The notification message may include a UE address, a PCF address, a PCF instance ID, a PCF set ID, and PCF binding information.

Step 14. Policy_Authorization_Subscribe: the V-PCF may transmit a PolicyAuthorization_Subscribe message to the SM-PCF to subscribe to a "UE reporting CC from associated URSP" event notification service. The V-PCF may configure an event ID of the notification message as "UE reporting CC from associated URSP rule" and an event filter as a list of CC. Further, the V-PCF may configure a flag that requires an immediate report. A response message may include a notification correlation ID, a CC value list, and PDU session information.

Step 15. SMPolicyControl_UpdateNotify (SM-PCF to SMF): the SM-PCF installs a PCRT for detecting "UE Reporting Connection Capabilities from associated URSP rule" if it is not the already installed content.

Step 16. The UE provides a CC report function for URSP enforcement during a registration procedure, and when the CC is included in the received URSP rule, and an application corresponding thereto is detected or the UE detects an application corresponding to the URSP rule including the CC, includes URSP rule enforcement in a PDU session generation or update message and transmits the same to the AMF. The AMF may transmit the PDU session generation or update message to the H-PCF in step 16B.

Step 17. When the SMF receives "UE report of URSP rule enforcement" during a PDU session generation or modification process and the PCRT is satisfied, the SMF includes PDU session-related information in a SMPolicyControl update message and report the same to the PCF.

Step 18. PolicyAuthorization_Notify: the V-PCF receives a notification for "UE reporting connection capabilities from associated URSP rule" from the SM-PCF. The event ID is "UE Reporting connection capabilities from associate URSP rule", and event information may include CC and PDU session information (reception of UE request PDU session information, allowed PDU session information, and serving PLMN ID information).

Step 19. In the case of non-roaming or HR, the UE-PCF identifies an operator policy and determines a policy for the URSP rule enforcement report.

Step 20. In a local breakout (LBO) roaming scenario, when receiving the PCRT from the H-PCF in step 4 and receiving event information for the UE reporting CC from associated URSP rule from the SM-PCF in step 18, the V-PCF transfers the received event information to the H-PCF. The event information may include CC information and PDU session information received from the SM-PCF. When S-NSSAI is included in the received information, the V-PCF changes the S-NSSAI information to HPLMN S-NSAAI and reports the received PDU session information to the H-PCF.
▪ The PDU session information which the V-PCF transfers to the H-PCF may include the following information (Information included in step 18 and step 20).
   - Connection Capabilities: list of CC value
   - UE requested PDU Session Information (requested by the UE)
   - PDU Session ID, Old PDU Session ID (for SSC mode 3)
   - UE requested DNN,
   - UE requested PDU Session Type,
   - S-NSSAI (initially requested by UE),
   - SSC Mode(s) supported by the UE,
   - Request-Type: "Initial Request", "Handover", "Emergency", "Emergency Existing Session"
   - PDU Session Request Type: whether to indicate "Establishment Request" or "Modification Request"
   - Access-Type: "Non-3GPP Access"
   - RAT-Type
   - Accepted PDU Session Information (determined by the SMF)
   - DNN (Selected DNN)
   - Alternative S-NSSAI (replaced by the AMF)
   - PDU Session Type selected by the SMF
   - SSC Mode selected by the SMF
   - PDU Session Type, IP Address or prefix or both
   - Associated Info
   - Service Network ID (PLMN ID or PLMN ID and NID) when LBO roaming (to identify the VPLMN specific URSP rules are applied)

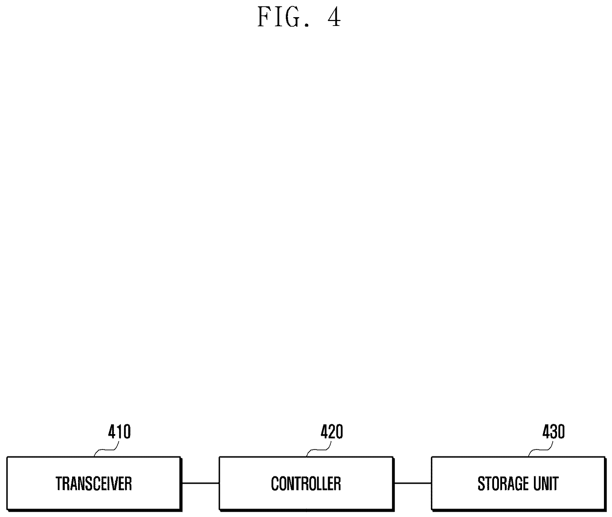

FIG. 4 is a diagram illustrating a structure of the UE according to an embodiment of the disclosure.

Referring to FIG. 4, the UE may include a transceiver 410, a controller 420, a storage unit 430. In the disclosure, the controller may be defined as a circuit, an application-specific integrated circuit, or at least one processor.

The transceiver 410 may transmit and receive a signal to and from another network. The transceiver 410 may receive system information from, for example, a base station, and may receive a synchronization signal, a reference signal, or the like.

The controller 420 may control the overall operation of the UE according to an embodiment proposed in the disclosure. For example, the controller 420 may control the UE to transmit UE capability information for a URSP enforcement report function to the AMF.

The storage unit 430 may store at least one piece of information transmitted and received through the transceiver 410 and information generated through the controller 420. For example, the storage unit 430 may store information on URSP enforcement.

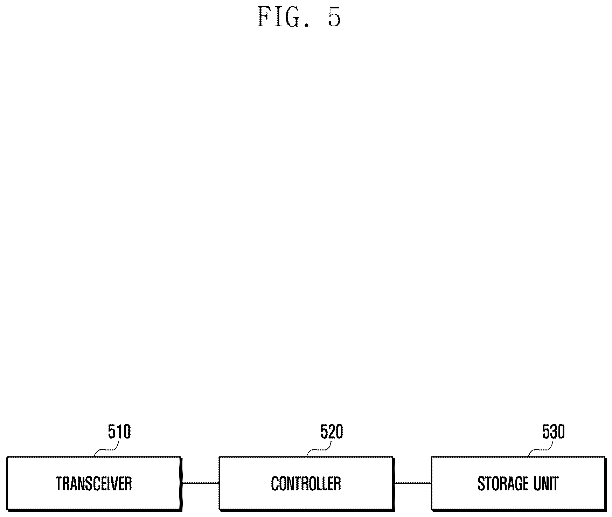

FIG. 5 is a diagram illustrating a structure of a network entity according to an embodiment of the disclosure.

The network entity of FIG. 5 may refer to one of NFs such as the AMF, the V-PCF, the BSF, the SM-PCF, the SMF, and the H-PCF.

Referring to FIG. 5, the network entity may include a transceiver 510, a controller 520, and a storage unit 530. In the disclosure, the controller may be defined as a circuit, an application-specific integrated circuit, or at least one processor.

The transceiver 510 may transmit and receive a signal to and from another network. The transceiver 510 may receive a signal from, for example, the UE or another network entity.

The controller 520 may control the overall operation of the network entity according to an embodiment proposed in the disclosure. Specifically, the controller 620 may control the signal flow between respective blocks to perform the operation of the flowchart in FIG. 3.

The storage unit 530 may store at least one piece of information transmitted and received through the transceiver 510 and information generated through the controller 520. For example, the storage unit 530 may store various pieces of information included in PDU session information.

The embodiments of the disclosure disclosed in the specification and drawings merely present specific examples to easily describe the technical content of the disclosure and help for understanding of the disclosure, and do not limit the scope of the disclosure. It may be apparent to those skilled in the art to which the disclosure belongs that other modified examples based on the technical idea of the disclosure can be implemented as well as the embodiments disclosed herein.

## Claims

1. A method performed by a visited-policy control function (V-PCF) of a visited public land mobile network (VPLMN) in a local breakout (LBO) roaming situation, the method comprising:
transmitting, to an H-PCF of a home PLMN (HPLMN), a terminal policy control request message;
receiving, from the H-PCF, a policy control request trigger (PCRT) for capability information of a terminal related to a UE route selection policy (URSP);
transmitting, to an SM-PCF managing a packet data unit (PDU) session, a request for subscribing to the capability information of the terminal related to the URSP;
receiving, from the SM-PCF, the capability information of the terminal related to the URSP; and
transmitting, to the H-PCF, the capability information of the terminal related to the URSP.

2. The method of claim 1, further comprising transmitting a request message for subscribing to an SM policy connection between an SMF and the SM-PCF to a biding support function (BSF).

3. The method of claim 1, wherein the capability information of the terminal related to the URSP includes a data network name (DNN) requested by the terminal and a DNN selected by a session management function (SMF).

4. The method of claim 1, wherein the capability information of the terminal related to the URSP includes S-NSSAI requested by the terminal and alternative S-NSSAI.

5. The method of claim 1, further comprising, in case that the capability information of the terminal related to the URSP received from the SM-PCF includes single-network slice selection assistance information (S-NSSAI), changing the S-NSSAI to HPLMN S-NSSAI.

6. A method performed by a home-policy control function (H-PCF) of a home public land mobile network (HPLMN) in a local breakout (LBO) roaming situation, the method comprising:
receiving, from a V-PCF of a visited PLMN (VPLMN), a terminal policy control request message;
transmitting, to the V-PCF, a policy control request trigger (PCRT) for capability information of a terminal related to a UE route selection policy (URSP); and
receiving, from the V-PCF, the capability information of the terminal related to the URSP.

7. The method of claim 6, wherein the capability information of the terminal related to the URSP includes a data network name (DNN) requested by the terminal and a DNN selected by a session management function (SMF).

8. The method of claim 6, wherein the capability information of the terminal related to the URSP includes S-NSSAI requested by the terminal and alternatively S-NSSAI.

9. A visited-policy control function (V-PCF) of a visited public land mobile network (VPLMN) operating in a local breakout (LBO) roaming situation, the V-PCF comprising:
a transceiver; and
a controller,
wherein the controller is configured to:
transmit, to an H-PCF of a home PLMN (HPLMN), a terminal policy control request message;
receive, from the H-PCF, a policy control request trigger (PCRT) for capability information of a terminal related to a UE route selection policy (URSP);
transmit, to an SM-PCF managing a packet data unit (PDU) session, a request for subscribing to the capability information of the terminal related to the URSP;
receive, from the SM-PCF, the capability information of the terminal related to the URSP; and
transmit, to the H-PCF, the capability information of the terminal related to the URSP.

10. The V-PCF of claim 9, wherein the controller is further configured to transmit a request message for subscribing to an SM policy connection between an SMF and the SM-PCF to a biding support function (BSF).

11. The V-PCF of claim 9, wherein the capability information of the terminal related to the URSP includes a data network name (DNN) requested by the terminal and a DNN selected by a session management function (SMF).

12. The V-PCF of claim 9, wherein the capability information of the terminal related to the URSP includes S-NSSAI requested by the terminal and alternative S-NSSAI.

13. The V-PCF of claim 9, wherein the controller is further configured to, in case that the capability information of the terminal related to the URSP received from the SM-PCF includes single-network slice selection assistance information (S-NSSAI), change the S-NSSAI to HPLMN S-NSSAI.

14. A home-policy control function (H-PCF) of a home public land mobile network (HPLMN) operating in a local breakout (LBO) roaming situation, the H-PCF comprising:
a transceiver; and
a controller,
wherein the controller is configured to:
receive, from a V-PCF of a visited PLMN (VPLMN), a terminal policy control request message;
transmit, to the V-PCF, a policy control request trigger (PCRT) for capability information of a terminal related to a UE route selection policy (URSP); and
receive, from the V-PCF, the capability information of the terminal related to the URSP.

15. The H-PCF of claim 14, wherein the capability information of the terminal related to the URSP includes a data network name (DNN) requested by the terminal, a DNN selected by a session management function (SMF), S-NSSAI requested by the terminal, and alternative S-NSSAI.
